# EUROPEAN PATENT APPLICATION

(11) **EP 3 053 664 A1**
(43) Date of publication of application: **10.08.2016**
(21) Application number: 13894693.4
(22) Date of filing: 30.09.2013
(51) Int. Cl.: B09C 1/00

(54) **SOIL SMOLDERING METHOD FOR REMEDIATION OF HEAVY METAL CO-CONTAMINATED SOIL**

(71) Applicant: Sun Yat-Sen University, Guangzhou, Guangdong 510275 (CN); Zhonghe Environmental Biotechnology Co. Ltd., Shenzhen, Guangdong 518000 (CN)
(72) Inventor: SHU, Wensheng, Guangzhou Guangdong 510006 (CN); NIU, Liqin, Guangzhou Guangdong 510006 (CN); ZHOU, Wenhua, Guangzhou Guangdong 510006 (CN); JIANG, Hua, Shenzhen Guangdong 518000 (CN)
(74) Representative: Bergmeier, Werner
(86) International application number: PCT/CN2013/084765
(87) International publication number: WO 2015/042975

(57) **Abstract**

A soil smoldering method for remediation of heavy-metal co-contaminated soil mainly comprises the following steps: plant stalks are covered with soil to form a covered body; the outer layer is a soil layer, and the stalks or a mixture of stalks and soil are arranged inside, causing the inside to be in an anaerobic state; the soil smoldering treatment is then carried out. Through solidification, absorption, chelation, complexation and other various reactions, treatment by the present method achieves a reduction in the proportion of chemical forms of heavy metals that can easily migrate and diffuse into the environment, and an increase in the proportion of chemical forms which are difficult to release into the environment. Therefore, environmental and ecological risks from heavy metals are reduced.

## Description

### FIELD OF THE INVENTION

The present disclosure relates to the technical field of remediation of heavy-metal contaminated soil, and more particularly, to a method for remediating heavy-metal co-contaminated soil by soil fumigation.

### BACKGROUND OF THE INVENTION

A soil contamination directly or indirectly affects human health, and causes unacceptable environmental risks, especially heavy-metal contamination of the soil. The heavy metals are extremely stable in the environment, thus they cannot be degraded by organisms, and cannot be degraded by heat, therefore, they are easy to be accumulated to a toxic concentration. Furthermore, the heavy metals are chronically enriched in the soil environment, this may severely affect food chain, plants and soil microbiological process. Heavy-metal contamination problem of the soil in a mining wasteland and its surrounding area is particularly serious, the mining wasteland continually release new acidic materials over time by oxidization of metal sulfides, in a strong acidic environment the solubility of the heavy metals increases, the formation of an acidified layer causes severe hardening of the soil, hindered maturation, insufficient supply of nitrogen, phosphorus and potassium and other nutrient elements, low content of organic matters, and poor fertility, causing the crops cannot grow.

At present, the remediation of heavy-metal contaminated soil mainly involves engineering measures, as well as some physical, chemical and biological remediation techniques. As for some engineering measures in which a purpose of soil replacement or soil dressing is achieved by a large machinery, usually the engineering quantity is large, and the investment is huge, furthermore the replaced contaminated soil may cause secondary contamination, therefore, such methods are generally only used in a severely contaminated area; although a physical remediation such as vitrification technique can achieve the purpose of immobilization of heavy metals, the investment is likewise expensive; chemical remediation techniques, for example adding some chemical modifiers or inhibitors into the contaminated soil, to reduce migration and diffusion of some soil pollutants. Although the method of adding chemical modifiers can temporarily alleviate the hazard of the heavy metals in the contaminated soil, long-term application of these chemical modifiers is prone to damage the soil; although some phytoextraction and phytostabilization techniques developed in recent years have certain remediation effectiveness, these techniques per se have some problems; for the phytostabilization technique, under some heavy-metal toxicity and other conditions, the vegetation is difficult to form a stable, self-maintaining ecosystem.

With the advent of the global energy crisis, some researchers found a substance of biological carbon having superior characteristic in the course of continually searching alternative energy. The biological carbon is a carbonaceous residue which is obtained by incomplete combustion of a carbon-rich biomass in an oxygen deficit state, and it is highly stable, moreover uneasy to be degraded. At present, in the remediation of heavy-metal contaminated soil by the biological carbon, there are also some research achievements, but most of these researches are only limited in experimental phase, furthermore, they are generally only effective to a certain kind of metal, and related researches and applications involving multiple heavy metals co-contaminated soil are very rare.

Huazhong Agricultural University has applied an application of CN 200910273440.3, its title is "A method for rapidly remediating in situ heavy-metal contaminated soil", wherein it was mentioned that a method in which rice straws with a moisture content of 5% were pulverized to stalks being less than or equal to 2 cm, and the stalks were mixed with the 0-20 cm surface soil contaminated by a heavy-metal cadmium for 90 days, to achieve a purpose of remediation of the heavy-metal contaminated soil, and to reduce bioavailability of the heavy metals, and to reduce absorption and accumulation of heavy metals by crops and vegetables. However, this method is time-consuming with a limited effectiveness, and can only treat two kinds of recorded heavy metals of cadmium and copper, furthermore this invention has a high requirement of stalks chopping, which requires fineness of the stalks to be 2 cm or less, therefore, this present technique is inconvenient to implement.

### SUMMARY OF THE INVENTION

To address the deficiencies exist in the prior art, a purpose of the present disclosure is to propose a method for remediating heavy-metal co-contaminated soil, and the method provides a in situ remediation technique for heavy-metal co-contaminated soil by rationally using waste resource, which is simple, efficient, easy to operate, and low cost.

According to the above-mentioned purpose, the present disclosure provides a method for remediating the heavy-metal co-contaminated soil, that is, plant stalks are put below a covering layer of a soil to-be-treated and incomplete combustion or carbonization are carried out in a high temperature and oxygen deficit state, and the main method for doing this comprises, covering the plant stalks are covered with a soil to form a covered body, an outer layer being a soil layer, an interior being stalks or a mixture of the stalks and soil; making the interior be in oxygen deficit state; and then carrying out a soil fumigation treatment. Wherein, there are many methods for covering and enclosing the plant stalks with the soil to-be-treated to form a covered body, for example, the plant stalks can be put at a center position, a periphery thereof is covered with the soil to-be-treated to heap up to a circle shape; the plant stalks can also be overlapped with the soil layer to heap up a circle shape, the outermost portion is covered with the soil layer; or the soil to-be-treated may also be heaped up to a kiln shape, and the plant stalks are put into the interior of the kiln, a surface layer of the kiln is covered with finer soil, to ensure that the plant stalks inside the kiln are in an oxygen deficit state. It should be noted that, in these covering methods of circle shape, the height and diameter of the circular stack should be determined according to the actual situation, mainly to ensure that a collapse will not occur during a soil fumigation. In addition to above several methods, according to specific condition, the soil to-be-treated is digged into a shape of ditch or long ridge, and the plant stalks are put into them, the external surfaces of the stalks are covered with the soil layer to-be-treated, and covered with finer soil near the external surface, to ensure that the interior is in the oxygen deficit state. During the plant stalks being covered with the soil to-be-treated, the thicknesses of the piled-up plant stalks layer and the soil layer to-be-treated are mainly determined according to on-site specific condition. Generally if the soil layer is too thick, the soil fumigation may be incomplete, affecting the soil fumigation effect; and if the soil layer is too thin, the amount of the fumigated soil is reduced, this may increase the workload. Therefore, generally according to the experience, in the covering method of overlapping the plant stalks with the soil to-be-treated into an circle shape, the thickness of the plant stalks layer is typically 10-20 cm, and the thickness of the soil layer to-be-treated is generally also 10-20 cm; in the covering method of the shape of ditch or ridge, the thicknesses of the plant stalks layer and the soil layer to-be-treated may also be 10-20 cm, but generally speaking, the covering thicknesses of the plant stalks layer and the soil layer need to be adjusted according to the specific condition, to ensure quality of the soil fumigation. Overall, no matter what covering method is adopted, the main purpose is to ensure that the plant stalks inside the soil layer to-be-treated is in the oxygen deficit state, then a soil fumigation treatment is carried out, making the plant stalks which is covered and enclosed with the soil layer to-be-treated undergo incomplete combustion or carbonization.

The soil to-be-treated also undergoes a pretreatment before covering, the pretreatment is that the soil to-be-treated is dried in the sun to have a moisture content of 10-15%, and for a farmland soil, generally a plough layer soil of 20 cm in the surface layer is used as the soil to-be-treated.

The plant stalks also undergo the pretreatment before being covered, the pretreatment is that the plant stalks are dried in the sun to make the moisture content of the plant stalks be about 3-10% of the total weight of the plant stalks. The moisture content of the plant stalks is too large, during soil fumigation they are uneasy to be fired, and the fire is easy to die out. In the circle shape covering method, in case of multi-layer overlapping of the soil layer with the stalks layer, in order to ensure the soil fumigation effect, the loose plant stalks may be tied up to a stalk bundle with an average length of 20-40 cm; in the kiln shape covering method, the loose plant stalks may be used, when the covered body is of the shape of circle and kiln, the plant stalks are tied up to a stalk bundle with a length of 20-40 cm; when the covered body is of the shape of ditch or ridge, the plant stalks are tied up to a stalk bundle with a length of 50-100 cm ; or loose non-bounded plant stalks may also be used.

The covering means that the plant stalks layer is enclosed and covered with the soil layer to-be-treated. During covering, it should be noted that, the soil blocks near the plant stalks are suitably large, the diameter thereof is preferably about 5 cm-6 cm, which can ensure that a side of the soil layer near the plant stalks retain a certain of porosity, so that during the soil fumigation the temperature and heat in different layers or at different locations in the same layer are easy to communicate and diffuse, and this ensures that the internal plant stalks undergo incomplete combustion or carbonization in the oxygen deficit and high temperature state. The soil blocks in the outermost surface of the soil should be as small as possible, and they are preferably a fine soil with a diameter less than I cm, which can ensure that the internal plant stalks can be sufficiently isolated from the outside air, so as to ensure a good effect for the plant stalks which is enclosed and covered with the soil to-be-treated on undergoing incomplete combustion or carbonization.

According to the purpose of the present disclosure, the present disclosure also provides a method for remediating heavy-metal co-contaminated soil, in which after the plant stalks are covered and enclosed with the soil to-be-treated, a soil fumigation treatment is carried out. There are many methods for igniting the plant stalks during the soil fumigation treatment, the plant stalks can be ignited, and a high temperature heating element may also be placed inside, its purpose is also mainly to ensure incomplete combustion or carbonization of the plant stalks in such an oxygen deficit and high temperature state. During this soil fumigation, finer soil should be continually covered at site of open flame if any, broken soil should be continually added at the site where thick smoke appears if any, and generally the duration of the soil fumigation treatment is 24-48 hours.

In the present disclosure, soil containing the biological carbon is obtained by such technique of soil fumigation, and it is an innovation in method application that using such technique into remediation of the heavy-metal contaminated soil; moreover, it was verified by experiment that due to the change in property and structure of the soil under action of the high temperature, the soil also has a good effectiveness of immobilizing heavy metals, and this is also a superiority of the present disclosure.

Generally speaking, the method provided by the present disclosure has the following advantages:
1. The plant stalks used in the present technique belongs to reuse of waste resource, and it has a practical significance in environmental protection.
2. The plant stalks undergo incomplete combustion or carbonization in the oxygen deficit and high temperature state, the soil containing the biological carbon is formed, and water-retention capacity as well as cation exchange capacity of such soil are enhanced, moreover, the soil fertility is also improved, and the most important is the soil crop yield after adopting the present technique is also increased.
3. The present technique has a potent effectiveness of simultaneously immobilizing multiple heavy metals. In the fumigated soil, the chemical forms of the heavy metals are changed by solidification, adsorption, chelation, complexation and other various reactions, and the migration and diffusion of the heavy metals into the surrounding environment are inhibited, so that absorption and accumulation of the heavy-metal by crops and vegetables are reduced. It was proved by the heavy-metal available extraction experiment as well as field test that: after the heavy-metal co-contaminated soil was treated by using the present technique, the heavy-metal content in the portion above the ground of the growing vegetables was obviously reduced, especially the content of toxic heavy-metal cadmium (Cd) was lower than the food contaminants maximum limit standard specified by International Codex Alimentarius Commission (CAC), and the level of safe food was reached. Meanwhile, sequential extraction experiments of the soil before and after the soil fumigation also verified such remediation effectiveness from chemical binding form of the heavy metals.
4. According to the present technique, during the soil fumigation, by monitoring, the temperature of the surface layer varies in the range of 34°C-75°C-170°C, the temperature of the middle layer varies in the range of 280°C-350°C-400°C, and the temperature of the center varies in the range of 598°C-510°C-450°C. In such high temperature environment, various pathogenic bacterias in the soil can be effectively killed, and the removal rate may reach to about 70%-80%.
5. Compared with the patent technique of CN 200910273440.3, the present disclosure has the following advantages:
   The remediation duration of the present technique is short. According to the patent technique of CN 200910273440.3, it is required three months to mix the rice straws with the contaminated soil, only after the three months the crops or vegetables can be planted, whereas according to the present technique, after the soil fumigation treatment, normal production and planting can immediately begin.

According to the present technique, the plant stalks covered by the soil layer to-be-treated undergo the carbonization in the oxygen deficit and high temperature state, and form fumigated soil containing the biological carbon. The biological carbon has an excellent inertia, and it can exist stably in the environment for several decades, even hundreds of years without degradation, whereas the patent technique of CN 200910273440.3 merely mixes the rice straws with the contaminated soil, although the remediation effectiveness can be obtained in a short time, the degradation and remediation effectiveness of the rice straws may be gradually reduced over time.

Furthermore, according to the present disclosure, after a high temperature treatment, the structure and property of the soil are changed, and it also have a certain ability of immobilizing heavy metals. This is superior to the patent technique of CN 200910273440.3.

The chemical forms of the heavy metals in the soil are also altered after treatment by using the present technique, the proportion of the chemical forms which is easy to migrate and diffuse into the environment is reduced, and the proportion of the chemical forms which is difficult to release into the environment is increased, thereby the environmental and ecological risks of the heavy metals are reduced. Furthermore, the present technique can simultaneously immobilize four heavy metals of lead (Pb), zinc (Zn), copper (Cu), and cadmium (Cd), furthermore a very good immobilizing effectiveness can be obtained, and this is proved by the results of both soil available extraction experiment and field vegetable heavy metal content test, whereas the patent technique of CN 200910273440.3 is only effective to two recorded heavy metals of copper (Cu) and cadmium (Cd).

### BRIEF DESCRIPTION OF THE DRAWINGS

- **FIG. 1**: shows five forms of lead (Pb);
- **FIG. 2**: shows five forms of zinc (Zn);
- **FIG. 3**: shows five forms of copper (Cu);
- **FIG. 4**: shows five forms of cadmium (Cd).

### DETAILED DESCRIPTION OF THE PREFERRED EMBODIMENTS

The present disclosure will be further explained in conjunction with the following examples, but these examples do not limit the present disclosure in any manner.

The site of the test was at a farmland near a certain lead-zinc mine in Guangdong Lechang. The total heavy-metal content of lead (Pb), zinc (Zn), copper (Cu), and cadmium (Cd) of this farmland soil were respectively 1988 mg/kg, 3833 mg/kg, 100 mg/kg, and 5.9 mg/kg. The remediation effectiveness on the heavy-metal contaminated soil of the present technique were all verified by using a field test method.

The carbonaceous residues of the plant stalks after incomplete combustion or carbonization in the oxygen deficit state were all biological carbon, thus, in the embodiment, we only selected the rice straw specific to South China as our test material.

### Example 1

DTPA available extraction effectiveness of the contaminated soil before and after the soil fumigation, after treatment by using the present technique (Table 1).

### (1) Binding of the rice straw and pretreatment of the contaminated soil;

The rice straw with moisture content of about 5% was tied up to a stalk bundle with uniform size and a length of about 30 cm.

A 20 cm surface layer soil of heavy-metal co-contaminated farmland near a certain lead-zinc mine in Guangdong Lechang was dried in the sun until the soil had moisture content of 10%.

### (2) Covering the rice straw with the soil to-be-treated

The treated soil in (1) and the bounded rice straw were prepared respectively. A covering method of multi-layer overlapping the rice straw with the soil layer to a circle shape was adopted. Firstly, a certain amount of bounded rice straws were put at the bottom, then a layer of larger soil block was covered onto the rice straw, and a certain amount of bounded rice straws were put onto the soil block, then a layer of lager soil block was covered onto it, and several layers were piled up in such a manner, and according to specific condition, in the example, the height of the soil fumigation circular stack was about 80 cm, the diameter of the bottom was about 100 cm. After the soil fumigation stack was piled up, the rice straws exposed outside the soil fumigation stack were continually completely covered with finer soil, and the outmost layer of the soil fumigation stack should be covered with the finer soil, so as to isolate from air, making the internal rice straws be in the oxygen deficit state.

### (3) Process of soil fumigation

The soil fumigation stack mentioned in (2) was ignited, and open flame and heavy smoke during combustion should be noticed. The finer soil was continually covered at the site of open flame, and a broken soil was continually added at the site of heavy smoke. After 24 hours of ignition and constant smoldering of the soil fumigation stack, the soil fumigation stack was stretched and blended, for use.

After the soil was treated by using the present technique, the result of the DTPA available extraction experiment indicated that: the present technique had a varying degree of immobilizing effectiveness on lead (Pb), zinc (Zn), copper (Cu), and cadmium (Cd) in the contaminated soil, the heavy-metal DTPA available form in the soil after treatment by the present technique were respectively reduced by 52.37%, 24.23%, 64.98% and 40.24%, compared with those prior to the treatment, and a significant effectiveness of heavy-metal immobilization was obtained.

**Table 1. DTPA available form extraction (unit: mg/kg)**

| Name of sample | DTPA Pb | DTPA Zn | DTPA Cu | DTPA Cd |
|---|---|---|---|---|
| Farmland soil (before soil fumigation) | 199.32±3.93 | 155.86±3.85 | 7.51±0.19 | 1.64±0.04 |
| Farmland soil (after soil fumigation) | 94.43±2.40 | 118.09±2.44 | 2.63±0.05 | 0.98±0.03 |

### Example 2

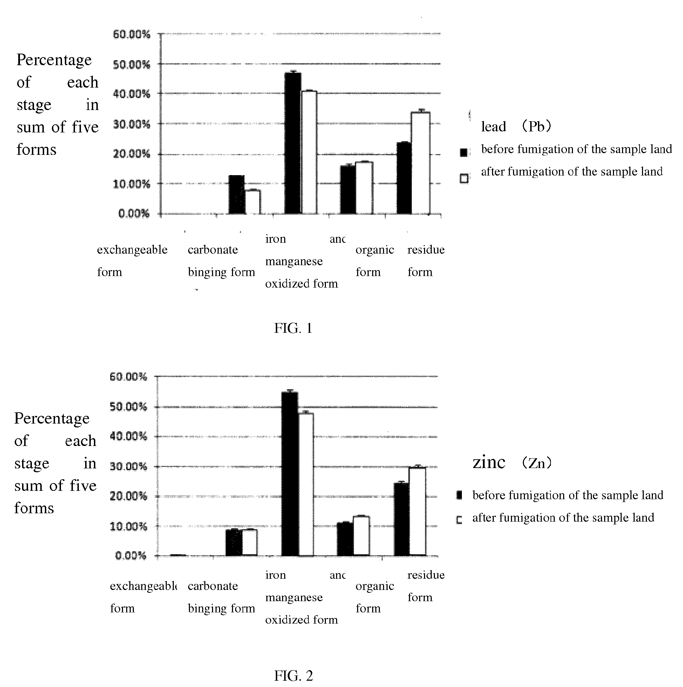

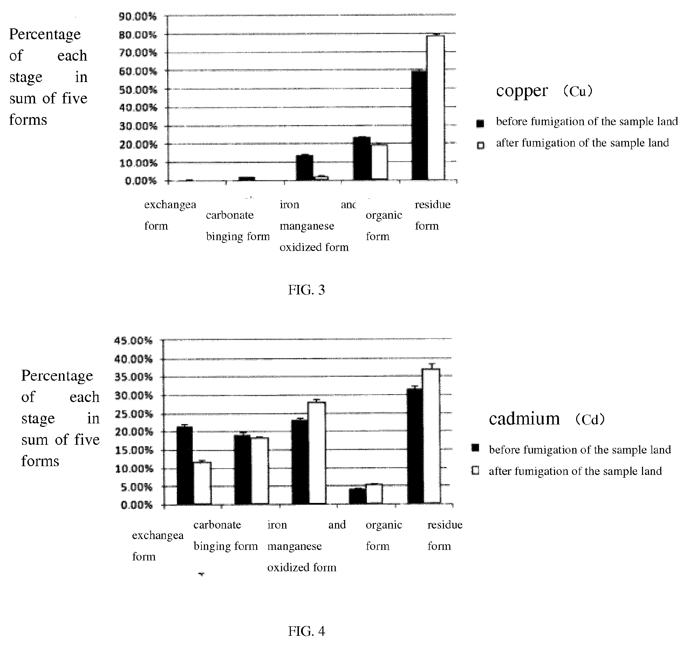

Before and after the soil was treated by using the present technique, a multiple-stage extraction test was respectively carried out by Tessier five-stage sequential extraction method (Tessier et al., 1979). The Tessier five-stage extraction was from the available form to carbonate binding form to iron and manganese oxidized form to organic from to residue form, and the ability of migration and release of the heavy metals into the environment became weaker and weaker, and the hazard to environment system also became smaller and smaller. The result of this test indicated that, the chemical forms of the heavy metals in the soil after treatment by the present technique was significantly varied compared with those prior to the treatment, the percentage of the sum of three unstable metal forms i.e. exchangeable form, carbonate binding form as well as iron and manganese oxidized form in all five-stage forms were reduced, for example, lead Pb (FIG. 1), zinc Zn (FIG. 2), copper Cu (FIG. 3), cadmium Cd (FIG. 4) were respectively reduced from 59.75%, 64.13%, 16.50% and 64.16% before treatment to 48.67%, 56.42%, 2.25% and 57.50% after treatment. And the proportion of sum of the two stable metal forms i.e. the organic binding form and residue form in the five forms were significantly increased by a varying degree, wherein, the content of lead Pb (FIG. 1) was increased from 40.25% before the soil fumigation to 51.33% after the soil fumigation, and the content of zinc Zn (FIG. 2) was increased from 35.87% before the soil fumigation to 56.83% after the soil fumigation, the contents of copper Cu (FIG. 3) and cadmium Cd (FIG. 4) were respectively increased from 83.50% and 35.84% before the soil fumigation to 97.75% and 42.50% after the soil fumigation. The organic form and residue form were more stable and inert metal forms, especially the residue form, their probability of release to the environment in the normal environment of the ground surface were very low, therefore, they were the most stable heavy-metal binding forms. The proportion of the organic and residue forms in sum of the five forms was increased, the proportion of other several forms in five forms was reduced, and this reduced the probability of migration and release of the heavy metals into the environment, thereby the risks of heavy-metal absorption and accumulation by the crops and vegetables were also reduced.

### Example 3

Guangdong Lechang field test, determining the biomass (Table 2) and heavy-metal contents (Table 3) of the part above the ground of the vegetables which were harvested in the field.

From May to August of 2012, in a farmland near a certain lead-zinc mine at Guangdong Lechang, using a random block method, totally six blocks and forty eight small samples of 2 mx2 m size were set, the total area was about 300 square meter. In each block, using a lottery method, twenty four small samples of the soil fumigation were determined randomly, these twenty four samples were treated by using the present technique, and compared with additional twenty four small samples without the soil fumigation, subsequently vegetables which can be planted in the local place at all seasons were planted, they were respectively south sweet bamboo mustard, four seasons of Chinese cabbage, Chinese cabbage with short legs and Chinese flowering cabbage.

During growth of the four vegetables, a NPK compound fertilizer was applied twice periodically and a pesticide was sprayed twice. The vegetables grew rapidly due to the seasonal reason, and they were harvested after about 40 days, and fresh weight of the biomass above the ground were weighed and calculated on site, and the samples were collected and brought back to the laboratory, dried and their dry weight were weighed. After some of the plant samples were brought back to the laboratory, the sediment was washed, then washed 3 times with de-ionized water, dried, pulverized, digested with microwave and nitro acid, the lead (Pb), zinc (Zn) and copper (Cu) in the digestion solution were determined by ICP-OES, and cadmium (Cd) was determined by atomic absorption. The result of the experiment indicated that, the present technique not only had a good effectiveness on immobilizing heavy metals, but also increased biomass of the vegetables, and the dry weight of the biomass of the part above the ground of the vegetables which were harvested on a sample land after the soil fumigation was increased by 34.28%-66.68% compared with that of the vegetables which were harvested on the sample land without the soil fumigation (Table 2), and there was a extremely significant change.

**Table 2. Dry weight data of the biomass of the part above the ground of vegetables in the sample land at Lechang (unit: g)**

| Name of vegetable | Dry weight of the biomass of the part above the ground of vegetables which were harvested in the sample land without the soil fumigation (g) | Dry weight of biomass of the part above the ground of vegetables which were harvested in the sample land after the soil fumigation (g) |
|---|---|---|
| south sweet bamboo mustard | 495.51 ±26.66 | 721.83 ±21.70 |
| four seasons of Chinese Cabbage | 325.71 ±39.47 | 469.07± 12.95 |
| Chinese cabbage with short legs | 378.07±25.36 | 507.67±37.17 |
| Chinese flowering cabbage | 397.75 ± 13.68 | 662.95 ±20.74 |

Moreover, the experiment results also show that, compared with the vegetables which were harvested in the non-treated soil (see Table 3), for the heavy-metal content of the part above the ground of the four vegetables which were harvested in the soil treated by using the present technique (on basis of fresh weight), , lead (Pb) was reduced by 53.12% at most, zinc (Zn) was reduced by 40.24% at most, copper (Cu) was reduced by 37.50% at most, and cadmium (Cd) was reduced by 57.68% at most. Especially for the toxic heavy-metal cadmium (Cd), the heavy-metal content of the vegetables which were harvested in the soil treated by using the present technique (on basis of fresh weight) was lower than the food contaminants limit standard specified by International Codex Alimentarius Commission (CAC), and the safe food level was reached (see Table 4).

**Table 3. The decreased percentage of the heavy-metal content of the part above the ground of the vegetables which were harvested in the sample land after the soil fumigation with respect to that of the part above the ground of the vegetables which were harvested in the sample land without soil fumigation (%) (on basis of fresh weight)**

| Name of vegetable | Pb | Zn | Cu | Cd |
|---|---|---|---|---|
| south sweet bamboo mustard | 35.29% ± 4.37% | 40.24% ± 7.92% | 15.39% ±4.25% | 57.68% ± 6.09% |
| four seasons of Chinese Cabbage | 30.46% ± 10.09% | 31.28% ± 6.98% | 37.50% ±4.02% | 52.70% ± 9.53% |
| Chinese cabbage with short legs | 37.88% ± 6.79% | 32.74% ± 6.82% | 36.59% ± 3.33% | 50.03% ± 3.90% |
| Chinese flowering cabbage | 53.12% ± 4.25% | 26.69% ±4.46% | 30.97% ± 3.16% | 47.91% ± 3.19% |

**Table 4. Measured values of the heavy-metal cadmium (Cd) of the part above the ground of the vegetables which were harvested in the sample land after the soil fumigation and in the sample land without the soil fumigation, and maximum limit of cadmium (Cd) in vegetable specified by International Codex Alimentarius Commission (CAC) (on basis of fresh weight) (unit: mg/kg)**

| Name of vegetable | south sweet bamboo mustard | four seasons of Chinese Cabbage | Chinese cabbage with short legs | Chinese flowering cabbage |
|---|---|---|---|---|
| CAC maximum limits | 0.2 | 0.2 | 0.2 | 0.2 |
| Measured values after soil fumigation | 0.10 | 0.14 | 0.06 | 0.18 |
| Measured values without soil fumigation | 0.25 | 0.32 | 0.12 | 0.35 |

## Claims

1. A method for remediating heavy-metal co-contaminated soil, comprising, covering plant stalks with the soil to form a covered body, of which the outer layer is a soil layer and the interiors are stalks or mixtures of the stalks and soil; making the interior be in an oxygen deficit state; and then carrying out a soil fumigation treatment.

2. The method according to claim 1, wherein, the covered body is of a shape of circle, kiln, ditch or ridge.

3. The method according to claim 1, wherein, the covering method is completed by multi-layer overlapping the soil layer with the stalk layer alternately, covering the outmost layer with the soil, and isolating from air; or by putting the plant stalks at a center, covering an external surface with a layer of the soil layer; or by firstly piling up a soil block to-be-treated into a kiln shape, then putting the plant stalks into the interior of the kiln, and covering an external surface of the kiln with the soil ; or by ploughing or digging the soil into a strip shape, putting the plant stalks into ploughed or digged pits, and covering an external surface with the soil layer to form a shape of ridge or ditch.

4. The method according to claim 3, wherein, when the covering method is completed by multi-layer overlapping the soil layer with the stalk layer alternately, a thickness of the soil layer is 10-20 cm, and the thickness of the stalk layer is 10-20 cm.

5. The method according to claim 1 or 2, wherein, the plant stalks undergo a pretreatment before being covered with the soil, and the pretreatment is that the plant stalks are dried to make a moisture content of the plant stalks be 3-10% of total weight of the plant stalks.

6. The method according to claim 2, wherein, when the covered body is of the shape of circle and kiln, the plant stalks are tied up to a stalk bundle with a length of 20-40 cm; and when the covered body is of the shape of ditch or ridge, the plant stalks are tied up to a stalk bundle with a length of 50-100 cm.

7. The method according to claim 1 or 2, wherein, the soil undergoes a pretreatment before covering, and the pretreatment is that the soil is dried to have a moisture content of 10-15%.

8. The method according to claim 1 or 2, wherein, the method for the soil fumigation is completed by igniting or putting a heating element inside the covered body.

9. The method according to claim 1 or 2, wherein, the duration for the soil fumigation treatment is 24-48 hours.

10. The method according to claim 1, wherein, during the soil fumigation treatment, covering any site of open flame or dense yellow smoke or black smoke with the soil, to keep the interior being in the oxygen deficit state.
